# EUROPEAN PATENT SPECIFICATION

(11) **EP 4 026 639 B1**
(45) Date of publication and mention of the grant of the patent: **08.11.2023**
(21) Application number: 22151048.0
(22) Date of filing: 11.01.2022
(51) Int. Cl.: B23B 47/22, B23Q 5/26, B23B 39/16

(54) **BORING HEAD**
BOHRKOPF
TÊTE DE PERÇAGE

(30) Priority: 11.01.2021 IT 202100000308
(43) Date of publication of application: 13.07.2022
(73) Proprietor: BIESSE S.p.A., 61122 Pesaro (PU) (IT)
(72) Inventor: BERNARDI, Paolo, 47841 CATTOLICA (RN) (IT)
(74) Representative: Studio Torta S.p.A.

(56) References cited:
- DE-A1- 10 234 054
- DE-A1-102011 100 297
- US-A1- 2014 076 078

## Description

### CROSS-REFERENCE TO RELATED APPLICATIONS

This Patent Application claims priority from Italian Patent Application No. 102021000000308 filed on January 11, 2021.

### TECHNICAL FIELD

The invention relates to a boring head, in particular for components made of wood or the like.

### BACKGROUND ART

In the industry of processing components made of wood or the like, a boring head is known, which comprises a plurality of boring units next to one another.

Each boring unit comprises an outer shell; an inner shell coupled to the outer shell in a sliding manner; and a tool-holding spindle coupled to the inner shell in a rotary and axially fixed manner so as to rotate, relative to the inner shell, around a rotation axis.

Each boring unit further comprises an operating assembly to move an assembly comprising the inner shell and the tool-holding spindle in a moving direction, which is parallel to the rotation axis, between a retracted rest position and an extracted operating position; and a locking assembly to lock the assembly in its extracted operating position.

The operating assembly comprises a variable-volume chamber, which is obtained in the outer shell and can be connected to a pneumatic supply device designed to supply a fluid under pressure to the variable-volume chamber so as to move the aforesaid assembly to its extracted operating position, and a pushing device, normally a spring, which is interposed between the outer shell and the assembly in order to move the assembly to - and normally hold it in - its retracted rest position.

The locking assembly comprises a coupling device, which is movable between a locking position, in which it locks the assembly in its extracted operating position, and a release position, and an operating device to move the coupling device between its locking position and its release position.

The boring head further comprises an operating unit to move the tool-holding spindles around the relative rotation axes.

The operating unit generally comprises an electric motor and a gear transmission interposed between an output shaft of the electric motor and the tool-holding spindles.

Known boring heads of the type described above suffer from some drawbacks, which are mainly due to the fact that the operating device, in order to move the coupling device between its locking position and its release position, is relatively complicated and expensive and leads to the creation of relatively large-sized boring heads.

DE 10 2011 100297 A1 discloses a boring head according to the preamble of claim 1.

### DISCLOSURE OF INVENTION

The object of the invention to provide a boring head, in particular for components made of wood or the like, which is not affected by the aforementioned drawbacks and is simple and economic to be implemented.

According to the invention, there is provided a boring head, in particular for components made of wood or the like, according to the appended independent claim 1. Preferable embodiments are defined in the dependent claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the boring head according to the invention;
figure 2 is a schematic perspective view, with parts removed for greater clarity, of a first detail of the boring head of figure 1;
figures 3 and 4 are two schematic side views, with cross-sectional parts and parts removed for greater clarity, of the detail of figure 2 shown in two different operating positions;
figure 5 is a schematic perspective view, with parts removed for greater clarity, of a detail of figures 3 and 4;
figures 6 and 7 are two schematic side views, with cross-sectional parts and parts removed for greater clarity, of a variant of the detail of figures 3 and 4 shown in two different operating positions;
figure 8 is a schematic perspective view, with parts removed for greater clarity, of a detail of figures 6 and 7;

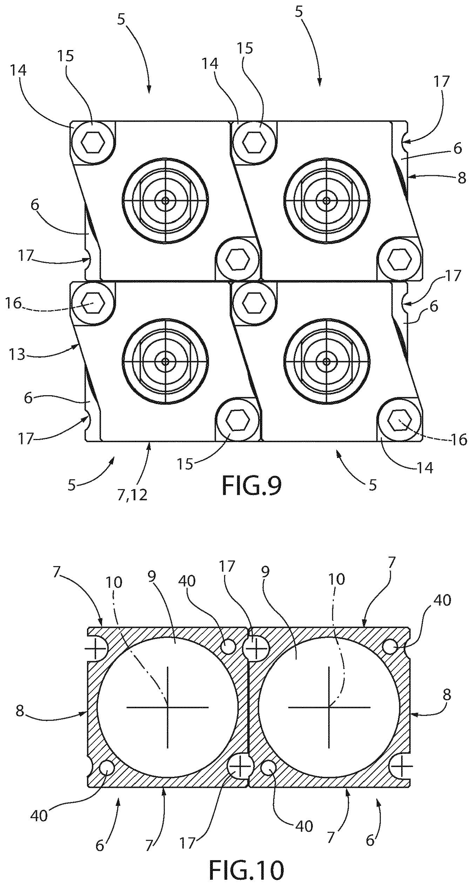

figure 9 is a schematic plan view, with parts removed for greater clarity, of a second detail of the boring head of figure 1; and
figure 10 is a schematic plan view, with parts removed for greater clarity, of a third detail of the boring head of figure 1.

### BEST MODE FOR CARRYING OUT THE INVENTION

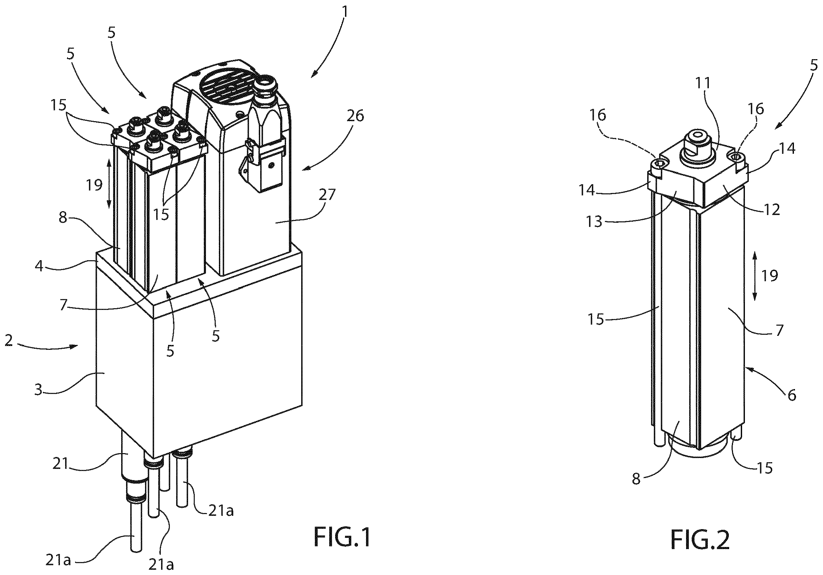

With reference to figures 1 to 4, number 1 indicates, as a whole, a boring head, in particular for boring components made of wood or the like (not shown).

The boring head 1 comprises a support frame 2 comprising, in turn, a box-shaped body 3 with a substantially parallelepiped-like shape with a substantially rectangular cross section and a closing plate 4 with a flat shape arranged in contact with an end face of the body 3.

The boring head 1 is further provided with a plurality of boring units 5, in this case four boring units 5 mounted on the frame 2 according to two rows of units 5 next to one another.

Each unit 5 comprises an outer shell 6, which has a substantially square shape, is limited by two side faces 7 parallel to one another and is further delimited by two side faces 8 parallel to one another and perpendicular to the faces 7.

The shell 6 is provided with a central hole 9 with a cylindrical shape having a longitudinal axis 10 substantially perpendicular to the plate 4 and projects from the plate 4 on the opposite side relative to the body 3.

The shell 6 has a free end, which is axially closed by a lid 11, which has the shape of a parallelogram, is delimited by two flat side faces 12 parallel to one another and coplanar to the faces 7 and is further delimited by two shaped side faces 13 defining, together with the faces 12, two appendages 14 arranged on opposite sides of the axis 10.

Each unit 5 is mounted on the frame 2 in a removable manner by means of a pair of fastening screws 15, each mounted through a centring hole 16 made in the corresponding appendage 14, extending along the shell 6 parallel to the axis 10 and being screwed into the plate 4.

Each screw 15 is housed inside a seat 17 with a substantially cylindrical shape, which is aligned with the relative hole 16 and is partly obtained on the face 8 of the shell 6 of the relative unit 5 and partly obtained on the face 8 of the shell 6 of the adjacent unit 5.

The unit 5 further comprises an inner shell 18, which is mounted inside the hole 9 coaxially to the axis 10, is coupled to the shell 6 in a sliding manner so as to make, relative to the shell 6 and in ways that will be better described below, straight movements in a moving direction 19 parallel to the axis 10 and is further coupled to the shell 6 in a fluid-tight manner by means of an annular gasket 20 mounted in an intermediate point of an outer surface of the shell 18.

The shell 18 houses, on the inside, an end shank of a tool-holding spindle 21, which extends through the frame 2, axially projects from the frame 2 on the opposite side relative to the unit 5 and is designed to receive and hold a known boring tool 21a.

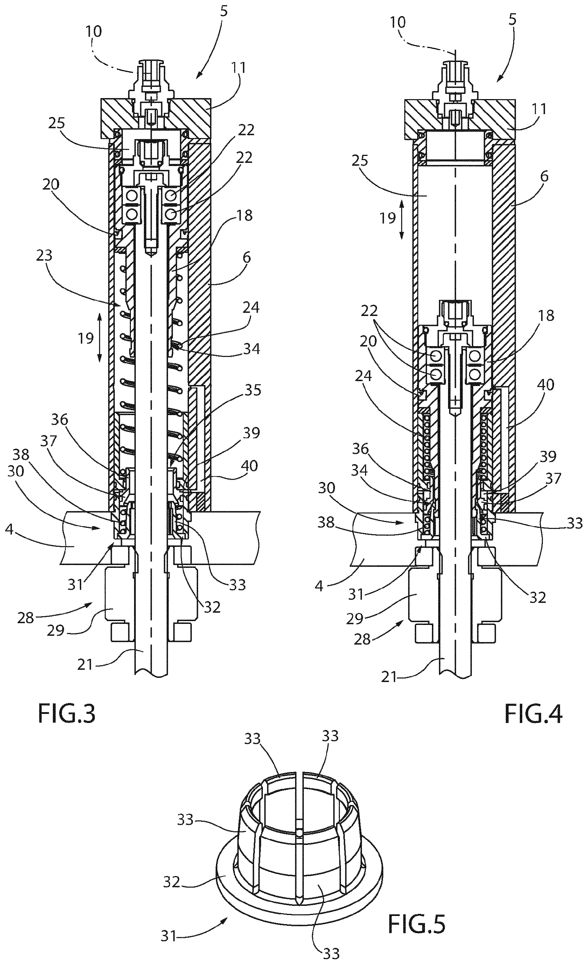

The spindle 21 is coupled to the shell 18 in an axially fixed manner and is further coupled to the shell 18 in a rotary manner through the interposition of a plurality of rolling bearings 22 (only some of them being shown in figures 3 and 4) so as to rotate, relative to the shell 18, around the axis 10.

The shell 18, the spindle 21 and the bearings 22 define at least part of an assembly 23, which is movable along the shell 6 and through the frame 2 in the direction 19 between a retracted rest position (figure 3) and an extracted operating position (figure 4).

The assembly 23 is moved to - and normally held in - its retracted rest position by a spring 24, which is mounted inside the shell 6 coaxially to the axis 10 and is interposed between the shell 6 and the assembly 23.

The assembly 23 is moved from its retracted rest position to its extracted operating position against the action of the spring 24 by a fluid under pressure fed into a variable-volume chamber 25, which is obtained between the shell 6 and the assembly 23 and is designed to be connected to a source (not shown) of the fluid under pressure.

The spindles 21 are caused to rotate around the relative axes 10 by an operating device 26 comprising an electric motor 27 fixed to the plate 4 parallel to the direction 19 and a gear transmission 28 interposed between an output shaft (not shown) of the motor 27 and the spindles 21.

The transmission 28 comprises, for each spindle 21, a respective gear 29, which is mounted inside the body 3 and is coupled to the spindle 21 by means of a splined profile coupling designed to allow the spindle 21 to move in the direction 19 between its retracted rest position and its extracted operating position.

The unit 5 is further provided with a locking assembly 30 to lock the assembly 23 in its extracted operating position.

According to figures 3, 4 and 5, the assembly 30 comprises a coupling device 31 comprising, in turn, an annular hub 32, which is fixed inside an end of the shell 6 opposite the lid 11, extends around the spindle 21 coaxially to the axis 10 and is provided with a plurality of elastically deformable teeth 33.

The teeth 33 are evenly distributed around the axis 10, axially project from the hub 32 towards the lid 11 and are movable between a locking position (figure 4), in which the teeth 33 engage an annular recess 34 obtained on the outer surface of a free end of the shell 18, and a release position (figure 3), in which the teeth 33 disengage the recess 34.

The assembly 30 further comprises an operating device 35 to move the teeth 33 to their locking position and hold them there.

The device 35 comprises a sleeve 36, which extends around the spindle 21 coaxially to the axis 10, has an end 37 with the shape of a truncated cone facing the teeth 33 and is coupled to the shell 6 in a sliding manner so as to make, relative to the shell 6, straight movements in the direction 19.

The sleeve 36 is movable between an operating position (figure 4), in which the teeth 33 are moved to and held in their locking position by the end 37 of the sleeve 36, and a rest position (figure 3), in which the teeth 33 are disengaged from the sleeve 36 in order to move to their release position.

The sleeve 36 is moved to - and normally held in - its rest position by a spring 38, which is mounted around the teeth 33 coaxially to the axis 10 and is interposed between the hub 32 and the sleeve 36.

The device 35 further comprises a variable-volume chamber 39, which is obtained between the shell 6 and the sleeve 36 and communicates with at least one pneumatic duct 40, which is obtained through the shell 6 and has a connection hole connecting it to the hole 9 and a connection hole connecting it to the chamber 39.

When the assembly 23 is arranged in its extracted operating position (figure 4), the gasket 20 is arranged between the two connection holes of the duct 40 connecting it to the chambers 25 and 39, the duct 40 communicates with the chamber 25 and the fluid under pressure contained in the chamber 25 and flowing between the shell 6 and the shell 18 is supplied to the chamber 39 in order to move the sleeve 36 to its operating position.

According to a variant which is not shown herein, the operating device 35 and the spring 38 are eliminated and the teeth 33 are moved between their locking position and their release position by means of alternative actuator means, for example directly through the fluid under pressure supplied to the chamber 39.

The unit 5 has some advantages that are mainly due to the fact that:
the sleeve 36 is moved from its rest position to its operating position by means of the fluid under pressure supplied from the chamber 25 to the chamber 39 along the duct 40 and from its operating position to its rest position by means of the spring 38, namely through a relatively simple and economic operating device, which is relatively small-sized;
the unit 5 is mounted on the frame 2 in a removable manner by means of the fastening screws 15 so that it can be removed in a relatively simple and quick fashion and so as to allow the unit 5 to be subjected to maintenance and/or replacement operations; and
the shape of the lids 11 and the configuration as well as the arrangement of the seats 17, on the one hand, keep the distance between the axes 10 constant and, on the other hand, lock the units 5 on the frame 2 in a relatively reliable manner.

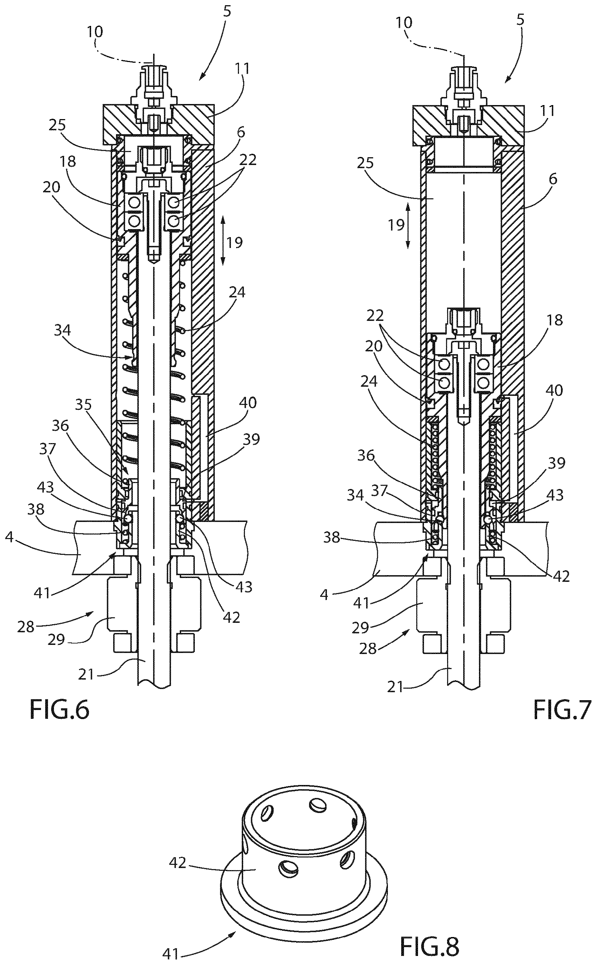

The variant shown in figures 6, 7 and 8 is different from the one shown in figures 3, 4 and 5 only in that, in it, the coupling device 31 is eliminated and is replaced by a coupling device 41 comprising a sleeve 42, which is fixed inside the shell 6, extends around the spindle 21 coaxially to the axis 10 and is provided with a plurality of balls 43 mounted through the sleeve 42.

The balls 43 are uniformly distributed around the axis 10 and are movable crosswise to the axis 10 between a locking position (figure 7), in which the balls 43 engage the recess 34, and a release position (figure 6), in which the balls 43 disengage the recess 34.

According to a variant which is not shown herein, the teeth 33 are eliminated and are replaced by oscillating sectors coupled to the hub 32 so as to rotate around respective fulcrum axes transverse to the axis 10 between their locking position and their release position.

## Claims

1. - A boring head, in particular for components made of wood or the like, comprising at least one boring unit (5) comprising, in turn, an outer shell (6); an inner shell (18) coupled to the outer shell (6) in a sliding manner; a tool-holding spindle (21) coupled to the inner shell (18) in a rotary and axially fixed manner so as to rotate, relative to the inner shell (18), around a rotation axis (10); an operating assembly (24, 25) to move an assembly (23) comprising the inner shell (18) and the tool-holding spindle (21) in a moving direction (19), which is parallel to the rotation axis (10), between an extracted operating position and a retracted rest position; and a locking assembly (30) to lock the assembly (23) in its extracted operating position; the operating assembly (24, 25) comprising a first chamber (25), which is obtained in the outer shell (6) and can be connected to a pneumatic supply device in order to move the assembly (23) to its extracted operating position, and a first pushing device (24) interposed between the outer shell (6) and the assembly (23) in order to move the assembly (23) to its retracted rest position; and the locking assembly (30) comprising a coupling device (31), which is movable between a locking position, in which it locks the assembly (23) in its extracted operating position, and a release position, and an operating device (35) to move the coupling device (31) to its locking position; and **characterized in that** the operating device (35) comprises a second chamber (39), which is obtained in the outer shell (6) so as to be connected to the first chamber (25) and, hence, to the pneumatic supply device when the assembly (23) is arranged in its extracted operating position.

2. - The boring head according to claim 1, wherein the outer shell (6) is provided with a feeding duct (40) having two connection holes connecting it to the first chamber (25) and to the second chamber (39).

3. - The boring head according to claim 2, wherein the inner shell (18) is coupled to the outer shell (6) in a fluid-tight manner through the interposition of a gasket (20) fitted on the inner shell (18) so that it is placed between said connection holes when the assembly (23) is arranged in its extracted operating position.

4. - The boring head according to any one of the preceding claims, wherein the coupling device (31) comprises a plurality of coupling members (33; 43), which are distributed around the rotation axis (10) and are movable between said locking position and said release position.

5. - The boring head according to claim 4, wherein each coupling member (33) is an elastically deformable tooth.

6. - The boring head according to claim 4, wherein each coupling member (43) is a ball.

7. - The boring head according to any one of the claims from 4 to 6, wherein the assembly (23) comprises at least one seat (34) to receive and hold the coupling members (33; 43) following their movement to the locking position.

8. - The boring head according to any one of the claims from 4 to 7, wherein the operating device (35) further comprises a sleeve (36), which is mounted in the second chamber (39), and is movable in the moving direction (19) between an operating position, in which the coupling members (33; 43) are moved to and held in their locking position by the sleeve (36), and a rest position, in which the coupling members (33; 43) are movable to their release position.

9. - The boring head according to claim 8, wherein the locking assembly (30) further comprises a second pushing device (38) interposed between the outer shell (6) and the sleeve (36) in order to move the sleeve (36) from its operating position to its rest position.

10. - The boring head according to claim 8 or 9, wherein the sleeve (36) is movable from its rest position to its operating position due to the thrust of a fluid under pressure fed into said first and second chambers (25, 39).

11. - The boring head according to any one of the preceding claims and further comprising a support frame (2); each boring unit (5) being mounted on the support frame (2) in a removable manner.

12. The boring head according to claim 11 and comprising, for each boring unit (5), at least two respective fastening screws (15) to lock the boring unit (5) on the support frame (2) in the moving direction (19).

13. - The boring head according to claim 12 and comprising at least two boring units (5) adjacent to one another; each fastening screw (15) extending in the moving direction (19), being screwed into the support frame (2) and being housed in a seat (17) obtained partly in the outer shell (6) of a boring unit (5) and partly in the outer shell (6) of the other boring unit (5).

14. - The boring head according to claim 13, wherein the outer shell (6) has a substantially square cross section and is axially closed by a lid (11), which is mounted on the opposite side of the support frame (2) relative to the outer shell (6) and substantially has the shape of a parallelogram.

15. - The boring head according to claim 14, wherein the lid (11) has, for each fastening screw (15), a respective centring hole (16), which is engaged by the fastening screw (15) and is aligned with the seat (17) of the fastening screw (15) in the moving direction (19).

16. - The boring head according to claim 15, wherein the lid (11) has, for each fastening screw (15), a respective appendage (14), which projects from the outer shell (6) and is provided with the centring hole (16) for the fastening screw (15).

17. - The boring head according to any one of the claims from 11 to 16 and further comprising an operating unit (26) to move the tool-holding spindles (21) around the relative rotation axes (10); the operating unit (26) comprising an electric motor (27), which is fixed to the support frame (2), and a gear transmission (28), which is housed inside the support frame (2) so as to connect the electric motor (27) and the tool-holding spindles (21) to one another.

## Patentansprüche

1. Bohrkopf, insbesondere für Bauteile aus Holz oder dergleichen, umfassend wenigstens eine Bohreinheit (5), die ihrerseits eine Außenschale (6), eine gleitend mit der Außenschale (6) gekoppelte Innenschale (18), eine drehbar zu und axial fest mit der Innenschale (18) gekoppelte Werkzeughaltespindel (21), die sich relativ zur Innenschale (18) um eine Drehachse (10) dreht, und eine Betätigungsbaugruppe (24, 25) zum Bewegen einer Baugruppe (23) umfasst, die die Innenschale (18) und die Werkzeughaltespindel (21) umfasst, in einer Bewegungsrichtung (19), die parallel zur Drehachse (10) verläuft, zwischen einer ausgezogenen Betriebsposition und einer eingezogenen Ruheposition; und eine Verriegelungsbaugruppe (30) zum Verriegeln der Baugruppe (23) in ihrer ausgezogenen Betriebsposition; wobei die Betätigungsanordnung (24, 25) eine erste Kammer (25), die in der Außenschale (6) ausgebildet ist und mit einer pneumatischen Versorgungsvorrichtung verbunden werden kann, um die Baugruppe (23) in ihre ausgefahrene Betriebsposition zu bewegen, und eine erste Schiebevorrichtung (24) umfasst, die zwischen der Außenschale (6) und der Baugruppe (23) angeordnet ist, um die Baugruppe (23) in ihre eingefahrene Ruheposition zu bewegen; und die Verriegelungsbaugruppe (30) eine Kupplungsvorrichtung (31), die zwischen einer Verriegelungsposition, in der sie die Baugruppe (23) in ihrer herausgezogenen Betriebsposition verriegelt, und einer Freigabeposition beweglich ist, und eine Betätigungsvorrichtung (35) umfasst, um die Kupplungsvorrichtung (31) in ihre Verriegelungsposition zu bewegen; und **dadurch gekennzeichnet, dass** die Betätigungsvorrichtung (35) eine zweite Kammer (39) umfasst, die in der Außenschale (6) so ausgebildet ist, dass sie mit der ersten Kammer (25) und somit mit der pneumatischen Versorgungsvorrichtung verbunden ist, wenn die Baugruppe (23) in ihrer herausgezogenen Betriebsposition angeordnet ist.

2. Bohrkopf nach Anspruch 1, wobei die Außenschale (6) mit einem Zuführungskanal (40) versehen ist, der zwei Verbindungslöcher aufweist, die ihn mit der ersten Kammer (25) und der zweiten Kammer (39) verbinden.

3. Bohrkopf nach Anspruch 2, wobei die Innenschale (18) mit der Außenschale (6) fluiddicht gekoppelt ist, mittels Zwischenschaltung einer Dichtung (20), die auf der Innenschale (18) angebracht ist, so dass sie zwischen den Verbindungslöchern angeordnet ist, wenn die Baugruppe (23) in ihrer herausgezogenen Betriebsposition angeordnet ist.

4. Bohrkopf nach einem der vorhergehenden Ansprüche, wobei die Kupplungsvorrichtung (31) eine Vielzahl von Kupplungselementen (33) umfasst, die um die Drehachse (10) verteilt sind und zwischen der Verriegelungsposition und der Freigabeposition beweglich sind.

5. Bohrkopf nach Anspruch 4, wobei jedes Kupplungselement (33) ein elastisch verformbarer Zahn ist.

6. Bohrkopf nach Anspruch 4, wobei jedes Kupplungselement (43) eine Kugel ist.

7. Bohrkopf nach einem der Ansprüche 4 bis 6, wobei die Baugruppe (23) mindestens einen Sitz (34) zur Aufnahme und zum Halten der Kupplungselemente (33; 43) folgend deren Bewegung in die Verriegelungsposition aufweist.

8. Bohrkopf nach einem der Ansprüche 4 bis 7, wobei die Betätigungsvorrichtung (35) ferner eine Hülse (36) aufweist, die in der zweiten Kammer (39) montierten ist und in der Bewegungsrichtung (19) bewegbar ist zwischen einer Betriebsposition, in der die Kupplungselemente (33; 43) durch die Hülse (36) in ihre Verriegelungsposition bewegt und gehalten werden, und einer Ruheposition, in der die Kupplungselemente (33; 43) in ihre Freigabeposition bewegbar sind.

9. Bohrkopf nach Anspruch 8, wobei die Verriegelungsbaugruppe (30) ferner eine zweite Schiebevorrichtung (38) umfasst, die zwischen der Außenschale (6) und der Hülse (36) angeordnet ist, um die Hülse (36) aus ihrer Betriebsposition in ihre Ruheposition zu bewegen.

10. Bohrkopf nach Anspruch 8 oder 9, wobei die Hülse (36) durch den Schub einer in die erste und zweite Kammer (25, 39) eingeleiteten Flüssigkeit aus ihrer Ruheposition in ihre Betriebsposition bewegbar ist.

11. Bohrkopf nach einem der vorhergehenden Ansprüche, der ferner einen Tragrahmen (2) umfasst, wobei jede Bohreinheit (5) abnehmbar am Tragrahmen (2) angebracht ist.

12. Bohrkopf nach Anspruch 11, der für jede Bohreinheit (5) mindestens zwei jeweilige Befestigungsschrauben (15) zur Arretierung der Bohreinheit (5) auf dem Tragrahmen (2) in der Bewegungsrichtung (19) aufweist.

13. Bohrkopf nach Anspruch 12 mit mindestens zwei nebeneinander angeordneten Bohreinheiten (5), wobei jede Befestigungsschraube (15) sich in Bewegungsrichtung (19) erstreckt, in den Tragrahmen (2) eingeschraubt ist und in einem Sitz (17) aufgenommen ist, der teilweise in der Außenschale (6) einer Bohreinheit (5) und teilweise in der Außenschale (6) der anderen Bohreinheit (5) ausgebildet ist.

14. Bohrkopf nach Anspruch 13, wobei die Außenschale (6) einen im Wesentlichen quadratischen Querschnitt aufweist und axial durch einen Deckel (11) verschlossen ist, der auf der der Außenschale (6) gegenüberliegenden Seite des Tragrahmens (2) angebracht ist und im Wesentlichen die Form eines Parallelogramms aufweist.

15. Bohrkopf nach Anspruch 14, wobei der Deckel (11) für jede Befestigungsschraube (15) jeweils ein Zentrierloch (16) aufweist, in das die Befestigungsschraube (15) eingreift und das mit dem Sitz (17) der Befestigungsschraube (15) in Bewegungsrichtung (19) fluchtet.

16. Bohrkopf nach Anspruch 15, wobei der Deckel (11) für jede Befestigungsschraube (15) jeweils einen Ansatz (14) aufweist, der aus der Außenschale (6) herausragt und mit dem Zentrierloch (16) für die Befestigungsschraube (15) versehen ist.

17. Bohrkopf nach einem der Ansprüche 11 bis 16 und ferner mit einer Betätigungseinheit (26) zum Bewegen der Werkzeughaltespindeln (21) um die jeweiligen Drehachsen (10); wobei die Betätigungseinheit (26) einen Elektromotor (27), der an dem Tragrahmen (2) befestigt ist, und ein Getriebe (28) aufweist, das innerhalb des Tragrahmens (2) untergebracht ist, um den Elektromotor (27) und die Werkzeughaltespindeln (21) miteinander zu verbinden.

## Revendications

1. Tête de perçage, en particulier pour des composants constitués de bois ou similaires, comprenant au moins une unité de perçage (5) comprenant, à son tour, une coque extérieure (6) ; une coque intérieure (18) couplée à la coque extérieure (6) de manière coulissante ; une broche porte-outil (21) couplée à la coque intérieure (18) de manière rotative et axialement fixe afin de tourner, par rapport à la coque intérieure (18), autour d'un axe de rotation (10) ; un ensemble fonctionnel (24, 25) pour déplacer un ensemble (23) comprenant la coque intérieure (18) et la broche porte-outil (21) dans une direction de déplacement (19), qui est parallèle à l'axe de rotation (10), entre une position fonctionnelle extraite et une position de repos rétractée ; et un ensemble de verrouillage (30) pour verrouiller l'ensemble (23) à sa position fonctionnelle extraite ; l'ensemble fonctionnel (24, 25) comprenant une première chambre (25), qui est obtenue dans la coque extérieure (6) et qui peut être reliée à un dispositif d'alimentation pneumatique afin de déplacer l'ensemble (23) à sa position fonctionnelle extraite, et un premier dispositif poussoir (24) interposé entre la coque extérieure (6) et l'ensemble (23) afin de déplacer l'ensemble (23) à sa position de repos rétractée ; et l'ensemble de verrouillage (30) comprenant un dispositif de couplage (31), qui est mobile entre une position de verrouillage, à laquelle il verrouille l'ensemble (23) à sa position fonctionnelle extraite, et une position de libération, et un dispositif fonctionnel (35) pour déplacer le dispositif de couplage (31) à sa position de verrouillage ; et **caractérisée en ce que** le dispositif fonctionnel (35) comprend une seconde chambre (39), qui est obtenue dans la coque extérieure (6) de manière à être reliée à la première chambre (25) et, par conséquent, au dispositif d'alimentation pneumatique lorsque l'ensemble (23) est agencé à sa position fonctionnelle extraite.

2. Tête de perçage selon la revendication 1, dans laquelle la coque extérieure (6) est pourvue d'un conduit d'amenée (40) comportant deux trous de liaison le reliant à la première chambre (25) et à la seconde chambre (39).

3. Tête de perçage selon la revendication 2, dans laquelle la coque intérieure (18) est couplée à la coque extérieure (6) d'une manière étanche aux fluides par l'interposition d'un joint (20) ajusté sur la coque intérieure (18) de sorte qu'il soit placé entre lesdits trous de liaison lorsque l'ensemble (23) est agencé à sa position fonctionnelle extraite.

4. Tête de perçage selon l'une quelconque des revendications précédentes, dans laquelle le dispositif de couplage (31) comprend une pluralité d'éléments de couplage (33 ; 43), qui sont répartis autour de l'axe de rotation (10) et qui sont mobiles entre ladite position de verrouillage et ladite position de libération.

5. Tête de perçage selon la revendication 4, dans laquelle chaque élément de couplage (33) est une dent déformable élastiquement.

6. Tête de perçage selon la revendication 4, dans laquelle chaque élément de couplage (43) est une bille.

7. Tête de perçage selon l'une quelconque des revendications 4 à 6, dans laquelle l'ensemble (23) comprend au moins un siège (34) pour recevoir et retenir les éléments de couplage (33 ; 43) à la suite de leur déplacement à la position de verrouillage.

8. Tête de perçage selon l'une quelconque des revendications 4 à 7, dans laquelle le dispositif fonctionnel (35) comprend en outre un manchon (36), qui est monté dans la seconde chambre (39), et qui est mobile dans la direction de déplacement (19) entre une position fonctionnelle à laquelle les éléments de couplage (33 ; 43) sont déplacés et retenus à leur position de verrouillage par le manchon (36), et une position de repos à laquelle les éléments de couplage (33 ; 43) peuvent se déplacer à leur position de libération.

9. Tête de perçage selon la revendication 8, dans laquelle l'ensemble de verrouillage (30) comprend en outre un second dispositif poussoir (38) interposé entre la coque extérieure (6) et le manchon (36) afin de déplacer le manchon (36) de sa position fonctionnelle à sa position de repos.

10. Tête de perçage selon la revendication 8 ou 9, dans laquelle le manchon (36) est mobile de sa position de repos à sa position fonctionnelle sous l'effet de la poussée d'un fluide amené sous pression dans lesdites première et seconde chambres (25, 39).

11. Tête de perçage selon l'une quelconque des revendications précédentes, comprenant en outre un cadre de support (2) ; chaque unité de perçage (5) étant montée sur le cadre de support (2) de manière amovible.

12. Tête de perçage selon la revendication 11, comprenant, pour chaque unité de perçage (5), au moins deux vis de serrage (15) respectives pour verrouiller l'unité de perçage (5) sur le cadre de support (2) dans la direction de déplacement (19).

13. Tête de perçage selon la revendication 12, comprenant au moins deux unités de perçage (5) adjacentes l'une à l'autre ; chaque vis de serrage (15) s'étendant dans la direction de déplacement (19), étant vissée dans le cadre de support (2) et étant logée dans un siège (17) obtenu en partie dans la coque extérieure (6) d'une unité de perçage (5) et en partie dans la coque extérieure (6) de l'autre unité de perçage (5).

14. Tête de perçage selon la revendication 13, dans laquelle la coque extérieure (6) présente une coupe transversale sensiblement carrée et est axialement fermée par un couvercle (11), qui est monté sur le côté opposé du cadre de support (2) par rapport à la coque extérieure (6) et présente sensiblement la forme d'un parallélogramme.

15. Tête de perçage selon la revendication 14, dans laquelle le couvercle (11) comporte, pour chaque vis de serrage (15), un trou de centrage (16) respectif, qui est engagé par la vis de serrage (15) et est aligné avec le siège (17) de la vis de serrage (15) dans la direction de déplacement (19).

16. Tête de perçage selon la revendication 15, dans laquelle le couvercle (11) comporte, pour chaque vis de serrage (15), un appendice (14) respectif, qui fait saillie depuis la coque extérieure (6) et est pourvu du trou de centrage (16) pour la vis de serrage (15) .

17. Tête de perçage selon l'une quelconque des revendications 11 à 16, comprenant en outre une unité fonctionnelle (26) pour déplacer les broches porte-outil (21) autour des axes de rotation (10) relatifs ; l'unité fonctionnelle (26) comprenant un moteur électrique (27), qui est fixé au cadre de support (2), et une transmission à engrenages (28), qui est logée à l'intérieur du cadre de support (2) de manière à relier le moteur électrique (27) et les broches porte-outil (21) l'un à l'autre.
